# EUROPÄISCHE PATENTSCHRIFT

(11) **EP 3 303 245 B1**
(45) Veröffentlichungstag und Bekanntmachung des Hinweises auf die Patenterteilung: **05.06.2019**
(21) Anmeldenummer: 16726149.4
(22) Anmeldetag: 20.05.2016
(51) Int. Cl.: C04B 7/43, C04B 7/60

(54) **VERFAHREN UND VORRICHTUNG ZUR BEHANDLUNG UND VERWERTUNG VON BYPASS-STÄUBEN**
METHOD AND DEVICE FOR TREATING AND UTILISING BYPASS DUSTS
PROCÉDÉ ET DISPOSITIF DE TRAITEMENT ET DE RECYCLAGE DES POUSSIÈRES DE DÉRIVATION

(30) Priorität: 28.05.2015 AT 3392015
(43) Veröffentlichungstag der Anmeldung: 11.04.2018
(73) Patentinhaber: Holcim Technology Ltd, 8645 Jona (CH)
(72) Erfinder: ZIHLMANN, Serge Lukas, 4302 Augst (CH); GROSS, Florian Christian, 13158 Berlin (DE)
(74) Vertreter: Keschmann, Marc
(86) Internationale Anmeldenummer: PCT/IB2016/000672
(87) Internationale Veröffentlichungsnummer: WO 2016/189374

(56) Entgegenhaltungen:
- WO-A1-2012/142638
- GB-A- 2 484 699
- US-A1- 2012 145 647

## Beschreibung

Die Erfindung betrifft ein Verfahren zur Behandlung und Verwertung von Bypass-Stäuben aus dem Zementherstellungsprozess umfassend die Schritte des In-Kontakt-bringen des Bypass-Staubes mit einer wässrigen Phase sowie Vermischen der beiden, um eine homogene Aufschlämmung zu erhalten, wobei wasserlösliche Bestandteile des Bypass-Staubes in der wässrigen Phase gelöst werden, (Schritt a) und des Durchführens einer Fest-Flüssig-Trennung, insbesondere einer Vakuumfiltration oder einer Filterpressenfiltration, um die in der Aufschlämmung enthaltenen Feststoffe abzutrennen, wobei eine Sole verbleibt (Schritt b).

Die Erfindung betrifft weiters eine Vorrichtung zur Durchführung eines solchen Verfahrens.

Ein Verfahren und eine Vorrichtung der eingangs genannten Art sind aus der WO 2012/142638 A1 bekannt.

Hauptbestandteile von Bypass-Stäuben sind CaO, SiO₂, Al₂O₃, Fe₂O₃ und MgO sowie kondensierte Verunreinigungen, wie K₂O, Na₂O, SO₃ und Cl. Bei der Zementherstellung werden die heißen Abgase des Brennofens zur Vorwärmung des Rohmehls benutzt. Infolge der Abkühlung kondensieren die im Abgas enthaltenen dampfförmigen Bestandteile, wie K₂O, Na₂O, SO₃ und Cl und werden mit dem Rohmehl wieder in den Brennofen zurückgeführt. Dadurch entsteht bei der Zementherstellung ein interner Kreislauf von solchen Stoffen, die im Brennofen verdampfen und bei der Vorwärmung des Rohmehls aus dem Abgas auskondensieren. Mit dem Rohmehl oder den Brennstoffen werden ständig neue unvermeidbare Bestandteile eingebracht, sodass die beschriebenen Kreisläufe immer mehr angereichert werden, wenn man nicht ständig einen Teil der heißen Abgase des Brennofens abziehen und damit auch anteilig die verdampften Verunreinigungen aus dem Herstellungsprozess entfernen würde. Dieser Teilgasstrom wird gekühlt und entstaubt und dieser Staub wird im folgenden als Zementofengasbypassstaub, kurz Bypass-Staub bezeichnet, wobei die unvermeidbaren Bestandteile auf den Staubkörnern kondensieren und mit dem Staub aus dem Abgas abgeschieden werden. Der dabei anfallende Bypass-Staub kann je nach Zusammensetzung und je nach der gewünschten Zementqualität als Zementzumahlstoff verwendet werden.

Mit dem Einsatz von alternativen Brennstoffen oder bei Verwendung bestimmter Rohstoffe im Zementherstellungsprozess und der damit verbundenen Einbringungen von zusätzlichen unvermeidbaren Bestandteilen entstehen ansteigende Mengen an Bypass-Stäuben, die ohne aufwendige Aufbereitung nicht zur Gänze verwendbar sind und deshalb bei vielen Zementherstellern teilweise deponiert werden, was jedoch mit einer erheblichen Umweltbelastung verbunden ist. Die Deponierung ist auch insofern nachteilig, als damit entsprechend hohe Verluste an bei der Zementherstellung brauchbaren Bestandteilen einhergehen. In aller Regel scheitert eine wirtschaftlich sinnvolle Verwendung der Produkte in der Zementindustrie an zu hohen Alkalien-, Chlorid-, Schwefel- oder Schwermetallgehalten.

Beim Gegenstand der WO 2012/142638 A1 wird der Bypass-Staub mit einer wässrigen Phase vermischt, wobei wasserlösliche Bestandteile des Bypass-Staubes in der wässrigen Phase gelöst werden und die in der Aufschlämmung enthaltenen Feststoffe mittels einer Fest-Flüssig-Trennung abgetrennt werden, wobei eine Sole verbleibt. Die Sole wird in der Folge in mehreren Schritten behandelt, um die in der Sole vorhandenen Schwermetalle abzutrennen und Calcium auszufällen. Die so behandelte Sole wird schließlich einer fraktionierten Kristallisation unterworfen, um vorwiegend KCl und NaCl zu gewinnen. Nachteilig bei dem Verfahren gemäß der WO 2012/142638 A1 ist jedoch, dass die Behandlung der Sole eine Reihe von Schritten umfasst, bei denen gesundheitsgefährdende und in der Handhabung aufwändige Chemikalien zum Einsatz gelangen, wie z.B. Na₂S als Fällungsmittel zum Abtrennen von Schwermetallen mittels Sulfidfällung, Alkalicarbonate (Na₂CO₃, K₂CO₃) als Fällungsmittel zum Ausfällen von CaCO₃, H₂O₂ zur Entfernung von Sulfid-Anionen (S²⁻) und HCl zur Absenkung des pH-Werts zur Zerstörung eines Überschusses von H₂O₂.

Es besteht somit die Aufgabe, ein Verfahren der eingangs genannten Art dahingehend zu verbessern, dass die Behandlung der Sole vereinfacht, die Kosten gesenkt und gleichzeitig ein hoher Grad der Schwermetallabtrennung erreicht werden können.

Zur Lösung dieser Aufgabe besteht die Erfindung bei einem Verfahren der eingangs genannte Art im Wesentlichen darin, dass eine Teilmenge der in der Sole vorhandenen Schwermetalle und ggf. Ca ausgefällt werden und der Niederschlag von der Sole abgetrennt wird (Schritt c) und dass die Sole einer Elektrokoagulation unterworfen wird, wobei ein Flokkulat, das die in der Sole verbliebenen Schwermetalle enthält, abgetrennt wird (Schritt d).

Das Abtrennen von Schermetallen erfolgt somit in zwei Stufen, wobei ein erster Teil der Schwermetalle in Schritt c) ausgefällt und der restliche Teil der Schwermetalle in Schritt d) abgetrennt wird. Insbesondere gelingt damit insgesamt eine Reduzierung des Schwermetallgehalts, insbesondere des Gehalts von Cr, Pb, Cd und Sb, auf unter 0,005 mg/L. In der ersten Stufe können die Schwermetalle, insbesondere ein Großteil des enthaltenen Bleis, insbesondere in Form von deren Hydroxiden bzw. Carbonaten abgetrennt werden. In der zweiten Stufe gelingt ein Abtrennen von insbesondere Chrom(III,VI).

Bevorzugt umfasst das Ausfällen gemäß Schritt c) das Zugeben eines Fällungsmittels, insbesondere CO₂ oder Carbonate, insbesondere Alkalicarbonate wie beispielsweise Na₂CO₃ oder K₂CO₃. Besonders bevorzugt ist hierbei der Einsatz von CO₂, insbesondere wenn CO₂ haltiges Abgas aus dem Brennofen der Klinkerherstellung eingesetzt wird. Die Zugabe von CO₂ führt dabei zu einer Absenkung des pH-Werts der Sole, was das Ausfällen der Schwermetalle begünstigt. Die Zugabe von CO₂ erfolgt hierbei bevorzugt in solchen Mengen, dass der pH-Wert der Sole von einem ursprünglichen Wert von 12-13 auf 8,5-10,5 reduziert wird. Die Zugabe von CO₂ bewirkt außerdem die Entfernung des in der Sole gelösten Kalkhydrats durch Karbonatfällung. Der einfachste Weg ist direktes Einblasen von CO₂-reichem Gas in die Sole. Die Reaktionsgleichungen lauten wie folgt:

CO₂ + OH⁻ → HCO₃⁻

2Ca(OH)₂ + 2HCO₃⁻ → 2CaCO₃↓ + 2H₂O + 2OH⁻

Die Absenkung des pH-Werts kann aber auch durch Zugabe einer Säure, wie z.B. HCl, H₂SO₄ oder dgl. erfolgen, wobei die Absenkung des pH-Werts die Ausfällung der Schwermetalle bewirkt.

Wenn in diesem Fall zusätzlich eine Ausfällung von Ca gewünscht ist, können als Fällungsmittel insbesondere Carbonate, vor allem Alkalicarbonate wie beispielsweise Na₂CO₃ oder K₂CO₃ zugegeben werden. Die Zugabe von Na₂CO₃ oder K₂CO₃ ist insbesondere dann von Vorteil, wenn die gereinigte Sole abschließend einer Kristallisation unterworfen werden soll, wodurch NaCl und KCl gewonnen werden können.

Die zweite Stufe der Schwermetallabtrennung erfolgt mittels Elektrokoagulation. Die Elektrokoagulation ist eine einfache und effiziente Methode, bei der das Flockungsmittel in situ durch eine elektrisch induzierte Oxidation einer Anode gebildet wird. Die plattenförmige Anode ist hierbei bevorzugt als Fe- und/oder Al-Elektrode ausgebildet. Den Anoden werden in alternierender Folge Kathoden entgegengesetzt, wodurch ein Plattenstapel entsteht. Alle Kathoden bzw. Anoden sind elektrisch leitend verbunden. Die plattenförmige Gegen-Kathode kann aus einem beliebigen leitenden Werkstoff hergestellt werden, bevorzugterweise besteht diese aus dem selben Material wie die Anode, wodurch eine Polumschaltung durchgeführt werden kann, die die Platten reinigt und bedingt durch die gleichmäßige Abnutzung der Elektrodenpaare die Standzeit der Platten bis zum Austausch verlängert. Der Abstand der Platten wir je nach spezifischer Leitfähigkeit der Sole gewählt.

Durch die angelegte Gleichspannung im Bereich von 2-10 V, bevorzugt zwischen 2-5 V, und bei Stromdichten von 400-800 A/m², finden folgende Reaktionen an Anode/Kathode und in der Lösung statt, die zur Reduktion der Schwermetallfracht führen:

### Anode

Bedingt durch das erzwungene Potential der Anode finden Oxidationsreaktionen statt, insbesondere löst sich die Anode unter Bildung von Fe²⁺, Fe³⁺ bzw. Al³⁺ Ionen auf. Gleichzeitig wird bei genügendem Potential gasförmiger Sauerstoff frei. Die folgenden Halbreaktionen, notiert in Reduktionsrichtung, finden statt:

Fe²⁺ + 2 e⁻ = Fe⁰ -0.44 V

Fe³⁺ + e⁻ = Fe²⁺ +0.77 V

oder

Al³⁺ + 3 e⁻ = Al⁰ -1.662 V

und

O_{2(g)} + 4 H⁺ + 4 e⁻ = H₂O +1.23 V

### Kathode

2 H₂O + 2 e⁻ = 2 OH⁻ + H_{2(g)} -0.83 V

Weiter findet direkte Reduktion von Schwermetallen statt, bspw. die Reduktion von hexavalentem Chrom Cr(VI)und Dichromat:

Cr⁶⁺ + 3 e⁻ = Cr³⁺ +1.33 V

Cr₂O₇²⁻ + 6 e⁻ + 14 H⁺ = 2 Cr³⁺ + 7 H₂O +1.33 V

### In Lösung

In Lösung, zwischen den Platten und/oder in einem nachgeschalteten Flockungsbehälter, finden sekundäre Reaktionen mit den gebildeten Ionen statt. Reduktion von Cr(VI) durch die Redoxreaktion:

Cr⁶⁺ + 3 Fe²⁺ → Cr³⁺ + 3 Fe³⁺

Schwermetalle, bspw. Cr und Pb, werden durch Hydroxide direkt gefällt:

Cr³⁺ + 3 OH⁻ → Cr (OH)_{3↓}

Pb²⁺ + 2 OH⁻ → Pb(OH)_{2↓}

und/oder sie lagern sich an Fe-/Al-hydroxid-flocken an:

Fe²⁺ + 2 OH⁻ → Fe(OH)_{2↓}

Al³⁺ + 3 OH⁻ → Al(OH)_{3↓}

Der an der Anode gebildete Sauerstoff führt weiter zu Oxidationen:

2Fe(OH)₂ + H₂O + ½O_{2(g)} → 2Fe(OH)₃

Die Entfernung der Schwermetalle beruht schließlich auf verschiedenen Mechanismen, besonders auf der in situ Generation von hoch aktiven Koagulanten (Fe²⁺, Fe³⁺, Al³⁺), weiter auf Reduktions-/Oxidationsreaktionen an den Elektroden sowie Feld- und Polarisationseffekten. Als Summenreaktion wird an der Anode Metall oxidiert und an der Kathode durch die Reduktion Wasserstoff freigesetzt. Durch die Gleichzeitige Produktion von OH⁻ Ionen an der Kathode steigt der pH Wert.

Die Elektrokoagulation ist auf Grund des hohen Salzgehalts der zu behandelnden Sole besonders energiesparsam. Der Salzgehalt erhöht die elektrische Leitfähigkeit der Sole, sodass der Stromverbrauch und damit die Betriebskosten gesenkt werden können.

Hinsichtlich der Abtrennung der in Schritt c) bzw. d) ausgefällten bzw. durch die Elektrokoagulation erhaltenen Stoffe sind folgende Verfahrensweisen bevorzugt. Das Abtrennen des Niederschlags in Schritt c) erfolgt mit Vorteil mittels Schwerkraftsedimentation. Das Abtrennen des Flokkulats in Schritt d) wird vorzugsweise mittels Filtration, insbesondere in einer Filterpresse, oder durch Zentrifugation vorgenommen.

Die Fest-Flüssig-Trennung gemäß Schritt b) wird bevorzugt mittels eines kontinuierlichen Abtrennungsverfahrens durchgeführt, wobei die Aufschlämmung und eine wässrige Phase in einer kontinuierlich arbeitenden Abtrennungsvorrichtung, insbesondere einem Bandfilter oder Vakuumbandfilter, im Gegenstrom geführt und in Kontakt gebracht werden. Dabei kann nach dem Durchlaufen eines ersten Abschnitts der kontinuierlichen Abtrennungsvorrichtung eine schwache Sole abgezogen und nach dem Durchlaufen eines weiteren Abschnitts der kontinuierlichen Abtrennungsvorrichtung eine starke Sole abgezogen werden.

Bevorzugt kann weiters vorgesehen sein, dass die nach dem zweiten und/oder jedem weiteren Abtrennungsschritt verbleibende schwache Sole oder Wasser bzw. die aus der kontinuierlichen Abtrennungsvorrichtung abgezogene schwache Sole zum Aufschlämmen des Bypass-Staubes oder des entstehenden Filterkuchens in Schritt a) und/oder zum Auswaschen des sich im ersten oder zweiten Abtrennungsschritt ergebenden Filterkuchens verwendet wird.

Eine bevorzugte Wiederverwendung der verwertbaren Bestandteile der Bypass-Stäube gelingt dadurch, dass die in Schritt c) und/oder Schritt d) abgetrennten Feststoffe nach einer ggf. erforderlichen Trocknung in den Zementherstellungsprozess rückgeführt werden, insbesondere als Zementzumahlstoff oder als Rohmehlkomponente.

Schließlich kann vorgesehen sein, dass die nach Schritt d) erhaltene behandelte Sole einer fraktionierten Kristallisation unterworfen wird. Bevorzugt wird hierbei Abwärme aus dem Zementherstellungsprozess, insbesondere aus dem Vorwärmer oder dem Klinkerkühler bei der fraktionierten Kristallisation zum Verdampfen der behandelten Sole verwendet. Die Abwärme aus dem Zementherstellungsprozess, insbesondere aus dem Vorwärmer oder dem Klinkerkühler kann ggf. auch zur Trocknung des in der fraktionierten Kristallisation erhaltenen Salzes verwendet werden.

Insbesondere ist es hierbei günstig, wenn die Abwärme aus dem Zementherstellungsprozess, insbesondere dem Vorwärmer oder dem Zementkühler einer Dampferzeugung zugeführt wird und der Dampf zum Erwärmen und Verdampfen der behandelten Sole in der fraktionierten Kristallisation verwendet wird, wobei das verdampfte Wasser der Sole zumindest teilweise zur weiteren Verdampfung von Sole zurück gewonnen wird. Als Wärmeübertragung kann zusätzlich auch ein Wärmeträgeröl Verwendung finden.

Eine Wiederverwendung des Prozesswassers gelingt bevorzugt dadurch, dass das in der fraktionierten Kristallisation verdampfte Wasser der Sole zumindest teilweise zum Aufschlämmen der Bypass-Stäube und/oder zum Aufschlämmen oder Auswaschen der in den verschiedenen Abtrennungsschritten abgetrennten Feststoffe verwendet wird.

Zusammenfassend hat das erfindungsgemäße Verfahren folgende Vorteile. Die Betriebskosten werden gesenkt, weil auf die Verwendung teurer Chemikalien verzichtet werden kann. Die Behandlung der Sole erfordert eine geringe Anzahl von Behandlungsschritten, sodass das Verfahren in einfacher Weise automatisiert werden kann. Auf Grund des Verzichts auf den Einsatz von Chemikalien können die Betriebssicherheit und der Schutz der Beschäftigten vor arbeitsbedingten Sicherheits- und Gesundheitsgefährdungen erhöht werden. Die CO₂-Emmission des Klinkerherstellungsverfahrens kann reduziert werden, weil CO₂ aus dem Brennofen als Fällungsmittel wiederverwendet wird.

Gemäß einem weiteren Aspekt der Erfindung wird eine Vorrichtung zur Durchführung des erfindungsgemäßen Verfahrens geschaffen, umfassend eine Mischvorrichtung zum In-Kontakt-bringen des Bypass-Staubes mit einer wässrigen Phase, eine erste Trennvorrichtung zum Durchführen einer Fest-Flüssig-Trennung, insbesondere einer Vakuumfiltration oder einer Filterpressenfiltration, und eine Behandlungsvorrichtung zur Behandlung der aus der Trennvorrichtung ausgetragenen Sole, wobei die Behandlungsvorrichtung eine Elektrokoagulationseinrichtung umfasst.

Eine bevorzugte Weiterbildung sieht vor, dass der Elektrokoagulationseinrichtung eine zweite Trennvorrichtung, insbesondere eine Zentrifuge oder eine Filtrationseinrichtung, zum Abtrennen des in der Elektrokoagulationseinrichtung erhaltenen Flokkulats nachgeordnet ist.

Mit Vorteil umfasst die Behandlungsvorrichtung weiters ein der Elektrokoagulationseinrichtung vorgeordnetes Bad mit einer Mischeinrichtung zum Ausfällen von Calcium und einer Teilmenge der in der Sole vorhandenen Schwermetalle.

Die Erfindung wird nachfolgend anhand eines in der Zeichnung schematisch dargestellten Ausführungsbeispiels näher erläutert.

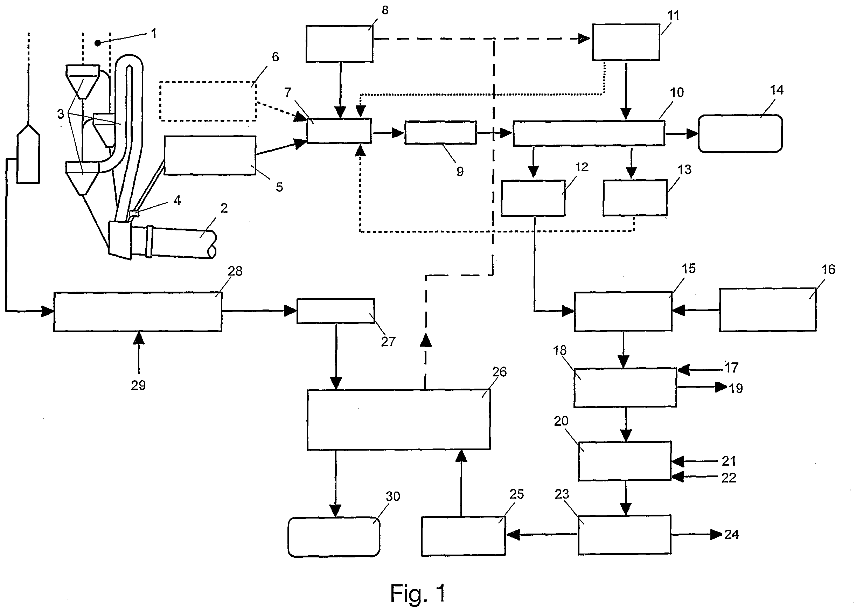

In Fig. 1 ist ein Zementherstellungsprozess schematisch mit 1 bezeichnet und weist einen Drehrohrofen 2 sowie ein an das Aufgabeende des Drehrohrofens 2 angeschlossenes Vorkalzinator- bzw. Vorwärmersystem 3 auf. An der schematisch mit 4 bezeichneten Stelle werden dem Zementherstellungsprozess Bypass-Stäube entnommen und in einem Silo 5 aufbewahrt. In einem weiteren Silo 6 werden ggf. an anderer Stelle des Zementherstellungsprozesses entnommene Stäube gelagert. Gemäß Schritt a) des erfindungsgemäßen Verfahrens werden die Stäube aus dem Silo 5 bzw. 6 einer Mischvorrichtung 7 zugeführt, in der die Stäube mit einer wässrigen Phase und/oder schwacher Alkalisole, die in einem Tank 8 und 11 bzw. 13 gelagert ist, in Kontakt gebracht sowie intensiv vermischt, um eine homogene Aufschlämmung zu erhalten. Optional kann in den in der Mischvorrichtung 7 stattfindenden Löseprozess Salzsäure zugegeben werden, um den Gehalt an Alkalien und Halogeniden anzugleichen. Mit 9 ist schematisch ein Extraktionsschritt bezeichnet, in dem die löslichen Bestandteile der Aufschlämmung aus den festen Bestandteilen ausgewaschen und in der wässrigen Phase gelöst werden. Die Aufschlämmung wird anschließend einem Vakuumbandfilter 10 zugeführt, in welchem der Schritt b) des erfindungsgemäßen Verfahrens durchgeführt wird. Im Vakuumbandfilter 10 werden die Aufschlämmung und Prozesswasser aus 11 im Gegenstrom zueinander geführt. Nach einem in Transportrichtung der Aufschlämmung ersten Abschnitt des Vakuumbandfilter 10 wird eine starke Sole 12 abgezogen. Nach einem in Transportrichtung der Aufschlämmung zweiten Abschnitt des Vakuumbandfilter 10 wird eine schwache Sole 13 abgezogen und es verbleibt ein Filterkuchen 14. Grundsätzlich kann der Waschschritt beliebig oft wiederholt werden. Der Filterkuchen 14 wird in der Folge ggf. getrocknet und kann dem Zementherstellungsprozess 1 als Rohmehlkomponente oder als Zementzumahlstoff rückgeführt werden. Die schwache Alkalisole 13 kann der Mischvorrichtung 7 zugeführt werden.

Die starke Alkalisole 12 wird gemäß Schritt c) des erfindungsgemäßen Verfahrens einer Ausfällung 15 von Calcium und Schwermetallen unterworfen, wobei CO₂ enthaltendes Gas 16 eingeblasen und eine Durchmischung mittels einer Mischeinrichtung erfolgt. Dadurch wird der pH-Wert der Sole auf einen Wert von 8,5-10,5 abgesenkt. Die Sole wird zur Durchführung einer Schwerkraftsedimentation, gegebenenfalls nach Zugabe eines Flockungshilfsmittels 17, in einen Sedimentationstank 18 übergeführt, in dem CaCO₃ und Schwermetallhydroxide 19 abgetrennt werden. Die auf diese Weise teilgereinigte Sole wird einer Elektrokoagulationsvorrichtung 20 aufgegeben, in der die verbleibenden Schwermetalle, insbesondere Chrom, durch Zufuhr elektrischer Energie 21 über Fe- und/oder Al-Anoden 22 koaguliert werden. Die Abtrennung der koagulierten Teilchen erfolgt in einer Trennvorrichtung 23, insbesondere einer Filtrationsvorrichtung oder einer Zentrifuge, wobei die abgetrennten Bestandteile 24 dem Zement als Fe- und/oder Al-Korrektiv zugeführt werden können.

Es resultiert eine behandelte, gereinigte Sole 25, die optional einer fraktionierten Kristallisation 26 unterzogen wird. Zum Erwärmen und Verdampfen der Sole wird Wasserdampf 27 herangezogen, der mit Hilfe von Abwärme 28 aus dem Vorwärmerabgas oder aus der Klinkerkühlerabluft erzeugt wird. Zur Erzeugung des Wasserdampfs 27 wird Frischwasser 29, befreit von gelösten Salzen, insbesondere von CalciumSalzen, durch eine Umkehrosmose, herangezogen. Das Brüdenwasser aus der fraktionierten Kristallisation 26 kann, wie mit strichlierter Linie angedeutet, weiters auch als Prozesswasser 11 wiederverwendet werden.

Aus der fraktionierten Kristallisation 26 resultieren verschiedene Salze 30, wobei es sich vorwiegend um KCl, NaCl und deren Gemische handelt. KCl kann besonders vorteilhaft in der Düngerindustrie verwendet werden. NaCl sowie die KCl/NaCl-Gemische können beispielsweise als Enteisungsmittel, insbesondere für Verkehrsflächen oder auch in der Aluminiumindustrie Verwendung finden. Optional werden die aus der Kristallisation 26 kommenden Salze einer nicht dargestellten Salztrocknung unterworfen, sodass getrocknete Alkalisalze 30 erhalten werden.

Die Erfindung wird weiters anhand von nachfolgend beschriebenen Ausführungsbeispielen näher erläutert.

### Beispiel 1

Es erfolgte zunächst die Herstellung von Sole auf einem Vakuumbandfilter gemäß den Schritten (a) und (b), wobei die so erhaltene Rohsole einen pH-Wert von 12,32 und eine Leitfähigkeit von 126 mS/cm aufwies. Die Rohsole wurde durch Einblasen von CO₂ auf einen pH-Wert von 8,45 neutralisiert, wodurch es zur Sedimentation von weißem Niederschlag kam, der nach 12-stündiger Sedimentation entfernt wurde, wodurch eine neutralisierte Sole erhalten wurde. Die neutralisierte Sole wurde einer Elektrokoagulation über Fe-Platten bei einer elektrischen Spannung von 6,0 V unterworfen. Das Flokkulat wurde in einer Filterpresse gefiltert, wodurch eine Reinsole erhalten wurde. Der Gehalt an Pb und Cr konnte durch das beschriebene Verfahren wie folgt gesenkt werden.

| Konzentration mg/L | **Pb** | **Cr** |
|---|---|---|
| **Rohsole** | NB | NB |
| **Neutralisierte Sole** | <0,005 | 0,129 |
| **Reinsole** | <0,005 | <0,005 |

### Beispiel 2

Es erfolgte zunächst die Herstellung von Sole auf einem Vakuumbandfilter gemäß den Schritten (a) und (b), wobei die so erhaltene Rohsole einen pH-Wert von 12,07 und eine Leitfähigkeit von 136 mS/cm aufwies. Die Rohsole wurde durch Einblasen von CO₂ auf einen pH-Wert von 8,13 neutralisiert, wodurch es zur Sedimentation von weißem Niederschlag kam, der nach 5-stündiger Sedimentation entfernt wurde, wodurch eine neutralisierte Sole erhalten wurde. Die neutralisierte Sole wurde einer Elektrokoagulation über Fe- und Al-Platten bei einer elektrischen Spannung von 4,0 V unterworfen. Das Flokkulat wurde in einer Filterpresse gefiltert, wodurch eine Reinsole erhalten wurde. Der Gehalt an Schwermetallen konnte durch das beschriebene Verfahren wie folgt gesenkt werden.

| Konzentration mg/L | **Pb** | **Cr** | **Sb** | **Cd** | **Zn** | **Cu** |
|---|---|---|---|---|---|---|
| **Roh Sole** | 32,2 | 1,11 | NB | NB | NB | NB |
| **Neutral. Sole** | 1,01 | 1,08 | 2,58 | 0,0154 | 0,0374 | 0,0368 |
| **Reinsole** | <0,005 | <0,005 | <0,005 | <0,0005 | 0,0111 | 0,0154 |

### Beispiel 3

Es erfolgte zunächst die Herstellung von Sole auf einem Vakuumbandfilter gemäß den Schritten (a) und (b), wobei die so erhaltene Rohsole einen pH-Wert von 11,01 und eine Leitfähigkeit von 102 mS/cm aufwies. Die Rohsole wurde durch Einblasen von CO₂ auf einen pH-Wert von 8,29 neutralisiert, wodurch es zur Sedimentation von weißem Niederschlag kam, der nach 3-stündiger Sedimentation entfernt wurde, wodurch eine neutralisierte Sole erhalten wurde. Die neutralisierte Sole wurde einer Elektrokoagulation über Fe- und Al-Platten bei einer elektrischen Spannung von 3,8 V unterworfen. Das Flokkulat wurde in einer Filterpresse gefiltert, wodurch eine Reinsole erhalten wurde. Der Gehalt an Pb und Cr konnte durch das beschriebene Verfahren wie folgt gesenkt werden.

| Konzentration mg/L | **Pb** | **Cr** |
|---|---|---|
| **Roh Sole** | NB | NB |
| **Neutralisierte Sole** | 1,107 | NB |
| **Reinsole** | 0,101 | <0,005 |

### Beispiel 4

Es erfolgte zunächst die Herstellung von Sole auf einem Vakuumbandfilter gemäß den Schritten (a) und (b), wobei die so erhaltene Rohsole einen pH-Wert von 12,24 und eine Leitfähigkeit von 198 mS/cm aufwies. Die Rohsole wurde durch Einblasen von CO₂ auf einen pH-Wert von 8,54 neutralisiert, wodurch es zur Sedimentation von weißem Niederschlag kam, der nach 3-stündiger Sedimentation entfernt wurde, wodurch eine neutralisierte Sole erhalten wurde. Die neutralisierte Sole wurde einer Elektrokoagulation über Fe- und Al-Platten bei einer elektrischen Spannung von 4,0 V unterworfen. Das Flokkulat wurde in einer Filterpresse gefiltert, wodurch eine Reinsole erhalten wurde. Der Gehalt an Pb und Cr konnte durch das beschriebene Verfahren wie folgt gesenkt werden.

| Konzentration mg/L | **Pb** | **Cr** |
|---|---|---|
| **Roh Sole** | NB | NB |
| **Neutralisierte Sole** | 3,07 | 0,02 |
| **Reinsole** | 0,719 | <0,005 |

## Patentansprüche

1. Verfahren zur Behandlung und Verwertung von Bypass-Stäuben aus dem Zementherstellungsprozess, umfassend die Schritte
a) In-Kontakt-bringen des Bypass-Staubes mit einer wassrigen Phase sowie Vermischen derselben, um eine homogene Aufschlämmung zu erhalten, wobei wasserlösliche Bestandteile des Bypass-Staubes in der wässrigen Phase gelöst werden,
b) Durchführen einer Fest-Flüssig-Trennung, insbesondere einer Vakuumfiltration oder einer Filterpressenfiltration, um die in der Aufschlämmung enthaltenen Feststoffe abzutrennen, wobei eine Sole verbleibt,
c) Ausfällen einer Teilmenge der in der Sole vorhandenen Schwermetalle und ggf. von Ca und Abtrennen des Niederschlags von der Sole,
d) Unterwerfen der Sole einer Elektrokoagulation, wobei ein Flokkulat, das die in der Sole verbliebenen Schwermetalle enthält, abgetrennt wird.

2. Verfahren nach Anspruch 1, **dadurch gekennzeichnet, dass** das Ausfällen gemäß Schritt c) das Zugeben eines Fällungsmittels, insbesondere CO₂ oder Carbonate, insbesondere Alkalicarbonate wie beispielsweise Na₂CO₃ oder K₂CO₃, zum Ausfällen von Calciumsalzen, insbesondere CaCO₃, umfasst.

3. Verfahren nach Anspruch 2, **dadurch gekennzeichnet, dass** CO₂ haltiges Abgas aus dem Brennofen entnommen und in Schritt c) als Fällungsmittel eingesetzt wird.

4. Verfahren nach Anspruch 1, 2 oder 3, **dadurch gekennzeichnet, dass** das Ausfällen gemäß Schritt c) die Absenkung des pH-Werts der Sole umfasst.

5. Verfahren nach Anspruch 4, **dadurch gekennzeichnet, dass** die Absenkung des pH-Werts durch Zugabe einer Säure, wie z.B. HCl, H₂SO₄ oder dgl. erfolgt.

6. Verfahren nach einem der Ansprüche 1 bis 5, **dadurch gekennzeichnet, dass** die nach Schritt d) erhaltene behandelte Sole einer fraktionierten Kristallisation unterworfen wird.

7. Verfahren nach einem der Ansprüche 1 bis 6, **dadurch gekennzeichnet, dass** das Abtrennen des Niederschlags in Schritt c) mittels Schwerkraftsedimentation erfolgt.

8. Verfahren nach einem der Ansprüche 1 bis 7, **dadurch gekennzeichnet, dass** das Abtrennen des Flokkulats in Schritt d) mittels Filtration, insbesondere in einer Filterpresse, oder durch Zentrifugation vorgenommen wird.

9. Verfahren nach einem der Ansprüche 1 bis 8, **dadurch gekennzeichnet, dass** die Fest-Flüssig-Trennung gemäß Schritt b) mittels eines kontinuierlichen Abtrennungsverfahrens durchgeführt wird, wobei die Aufschlämmung und eine wässrige Phase in einer kontinuierlich arbeitenden Abtrennungsvorrichtung, insbesondere einem Bandfilter oder Vakuumbandfilter, im Gegenstrom geführt und in Kontakt gebracht werden.

10. Verfahren nach einem der Ansprüche 1 bis 9, **dadurch gekennzeichnet, dass** die in Schritt c) und/oder Schritt d) abgetrennten Feststoffe nach einer ggf. erforderlichen Trocknung in den Zementherstellungsprozess rückgeführt werden, insbesondere als Zementzumahlstoff oder als Rohmehlkomponente.

11. Verfahren nach einem der Ansprüche 1 bis 10, **dadurch gekennzeichnet, dass** das in Schritt c) ausgefällte Calciumsalz der Aufschlämmung in Schritt a) zugegeben und in Schritt b) als Feststoff abgetrennt wird.

12. Verfahren nach einem der Ansprüche 1 bis 10, **dadurch gekennzeichnet, dass** die Elektrokoagulation mittels einer Fe- und/oder Al-Anode erfolgt.

13. Vorrichtung zur Durchführung eines Verfahrens nach einem der Ansprüche 1 bis 12, umfassend eine gesondert von der Elektrokoagulationseinrichtung ausgebildete Mischvorrichtung zum In-Kontakt-bringen des Bypass-Staubes mit einer wässrigen Phase, eine erste Trennvorrichtung zum Durchführen einer Fest-Flüssig-Trennung, insbesondere einer Vakuumfiltration oder einer Filterpressenfiltration, wobei die Trennvorrichtung der Elektrokoagulationseinrichtung vorgeordnet ist, und eine Behandlungsvorrichtung zur Behandlung der aus der Trennvorrichtung ausgetragenen Sole, wobei die Behandlungsvorrichtung eine Elektrokoagulationseinrichtung umfasst.

14. Vorrichtung nach Anspruch 13, **dadurch gekennzeichnet, dass** der Elektrokoagulationseinrichtung eine zweite Trennvorrichtung, insbesondere eine Zentrifuge oder eine Filtrationseinrichtung, zum Abtrennen des in der Elektrokoagulationseinrichtung erhaltenen Flokkulats nachgeordnet ist.

15. Vorrichtung nach Anspruch 13 oder 14, **dadurch gekennzeichnet, dass** die Behandlungsvorrichtung weiters ein der Elektrokoagulationseinrichtung vorgeordnetes Bad mit einer Mischeinrichtung zum Ausfällen von Calcium und einer Teilmenge der in der Sole vorhandenen Schwermetalle umfasst.

16. Vorrichtung nach Anspruch 13, 14 oder 15, **dadurch gekennzeichnet, dass** die Elektrokoagulationseinrichtung eine Fe- und/oder Al-Anode aufweist.

17. Vorrichtung nach einem der Ansprüche 13 bis 16, **dadurch gekennzeichnet, dass** der Behandlungsvorrichtung eine Vorrichtung zu Durchführung einer fraktionierten Kristallisation nachgeordnet ist.

## Claims

1. A method for treating and utilizing bypass dusts from the cement production process, comprising the steps of
a) contacting the bypass dust with an aqueous phase and mixing the same in order to obtain a homogenous suspension, wherein water-soluble components of the bypass dust are dissolved in the aqueous phase,
b) performing a solid/liquid separation, in particular a vacuum filtration or a filter press filtration, in order to separate the solids contained in the suspension, wherein a brine remains,
c) precipitating a partial amount of the heavy metals present in the brine, and optionally Ca, and separating the precipitate from the brine,
d) subjecting the brine to an electrocoagulation, wherein a flocculate containing the heavy metals remaining in the brine is separated.

2. A method according to claim 1, **characterized in that** precipitating according to step c) comprises the adding of a precipitant, in particular CO₂ or carbonates, in particular alkali carbonates such as Na₂CO₃ or K₂CO₃, for precipitating calcium salts, in particular CaCO₃.

3. A method according to claim 2, **characterized in that** CO₂-containing exhaust gas is removed from the kiln and used as precipitant in step c).

4. A method according to claim 1, 2 or 3, **characterized in that** precipitating according to step c) comprises the lowering of the pH of the brine.

5. A method according to claim 4, **characterized in that** the lowering of the pH is achieved by adding an acid such as HCl, H₂SO₄ or the like.

6. A method according to any one of claims 1 to 5, **characterized in that** the treated brine obtained according to step d) is subjected to fractional crystallization.

7. A method according to any one of claims 1 to 6, **characterized in that** the separating of the precipitate in step c) is performed by gravity sedimentation.

8. A method according to any one of claims 1 to 7, **characterized in that** the separating of the flocculate in step d) is effected by filtration, in particular in a filter press, or by centrifugation.

9. A method according to any one of claims 1 to 8, **characterized in that** the solid-liquid separation according to step b) is performed by a continuous separation method, wherein the suspension and an aqueous phase are conducted in countercurrent, and contacted, in a continuously operating separation device, in particular a belt filter or vacuum belt filter.

10. A method according to any one of claims 1 to 9, **characterized in that** the solids separated in step c) and/or step d), after optionally required drying, are returned into the cement production process, in particular as cement grinding additive or as raw meal component.

11. A method according to any one of claims 1 to 10, **characterized in that** the calcium salt precipitated in step c) is added to the suspension in step a) and separated as solid in step b).

12. A method according to any one of claims 1 to 10, **characterized in that** the electrocoagulation is performed using a Fe and/or Al anode.

13. A device for carrying out the method according to any one of claims 1 to 12, comprising a mixing device, which is designed to be separate from the electrocoagulation device, for contacting the bypass dust with an aqueous phase, a first separation device for performing a solid-liquid separation, in particular a vacuum filtration or a filter press filtration, wherein the separation device is arranged upwards the electrocoagulation device, and a treatment device for treating the brine discharged from the separation device, said treatment device comprising an electrocoagulation device.

14. A device according to claim 13, **characterized in that** the electrocoagulation device is followed by a second separation device, in particular a centrifuge or a filtration device, for separating the flocculate obtained in the electrocoagulation device.

15. A device according to claim 13 or 14, **characterized in that** the treatment device further comprises a bath preceding the electrocoagulation device and including a mixing device for precipitating calcium and a partial amount of the heavy metals present in the brine.

16. A device according to claim 13, 14 or 15, **characterized in that** the electrocoagulation device comprises a Fe and/or Al anode.

17. A device according to any one of claims 13 to 16, **characterized in that** the treatment device is followed by a device for carrying out a fractional crystallization.

## Revendications

1. Procédé de traitement et de recyclage de poussières de dérivation provenant du processus de fabrication de ciment, comprenant les étapes suivantes
a) mise en contact de la poussière de dérivation avec une phase aqueuse et mélange de celles-ci pour obtenir une suspension homogène, dans lequel des composants hydrosolubles de la poussière de dérivation sont dissous dans la phase aqueuse,
b) réalisation d'une séparation solide-liquide, en particulier d'une filtration sous vide ou d'une filtration sur filtres-presses pour séparer les matières solides contenues dans la suspension, dans lequel reste une saumure,
c) précipitation d'une quantité partielle de métaux lourds contenus dans la saumure et le cas échéant, du Ca et séparation du précipité de la saumure,
d) exposition de la saumure à une électrocoagulation, dans lequel un floculat qui inclut les métaux lourds restant dans la saumure est séparé.

2. Procédé selon la revendication 1, **caractérisé en ce que** la précipitation selon l'étape c) comprend l'addition d'un agent de précipitation, en particulier du CO₂ ou des carbonates, en particulier des carbonates alcalins comme par exemple Na₂CO₃ ou K₂CO₃, pour la précipitation de sels de calcium, en particulier de CaCO₃.

3. Procédé selon la revendication 2, **caractérisé en ce que** du gaz d'échappement contenant du CO₂ est retiré du four de combustion et est utilisé à l'étape c) comme agent de précipitation.

4. Procédé selon la revendication 1, 2 ou 3, **caractérisé en ce que** la précipitation selon l'étape c) comprend l'abaissement du pH de la saumure.

5. Procédé selon la revendication 4, **caractérisé en ce que** l'abaissement du pH s'effectue par addition d'un acide tel que par exemple du HCl, H₂SO₄ ou similaires.

6. Procédé selon l'une quelconque des revendications 1 à 5, **caractérisé en ce que** la saumure traitée obtenue après l'étape d) est soumise à une cristallisation fractionnée.

7. Procédé selon l'une quelconque des revendications 1 à 6, **caractérisé en ce que** la séparation du précipité de l'étape c) s'effectue au moyen d'une sédimentation par la gravité.

8. Procédé selon l'une quelconque des revendications 1 à 7, **caractérisé en ce que** la séparation du floculat à l'étape d) est entreprise au moyen d'une filtration, en particulier dans un filtre-presse, ou par centrifugation.

9. Procédé selon l'une quelconque des revendications 1 à 8, **caractérisé en ce que** la séparation solide-liquide selon l'étape b) est réalisée au moyen d'un procédé de séparation continu, dans lequel la suspension et une phase aqueuse sont conduites à contre-courant et mises en contact dans un dispositif de séparation fonctionnant en continu, en particulier un filtre à bande ou un filtre à bande sous vide.

10. Procédé selon l'une quelconque des revendications 1 à 9, **caractérisé en ce que** les matières solides séparées à l'étape c) et/ou à l'étape d) sont réacheminées dans le processus de fabrication de ciment après un séchage nécessaire le cas échéant, en particulier en tant qu'additifs broyés du ciment ou en tant que composants de farine brute.

11. Procédé selon l'une quelconque des revendications 1 à 10, **caractérisé en ce que** le sel de calcium précipité à l'étape c) est ajouté à la suspension à l'étape a) et est séparé en tant que matière solide à l'étape b).

12. Procédé selon l'une quelconque des revendications 1 à 10, **caractérisé en ce que** l'électrocoagulation s'effectue au moyen d'une anode de Fe et/ou Al.

13. Dispositif de réalisation d'un procédé selon l'une quelconque des revendications 1 à 12, comprenant un dispositif de mélange conçu de façon séparée de l'appareil d'électrocoagulation pour mettre en contact la poussière de dérivation avec une phase aqueuse, un premier dispositif de séparation pour réaliser une séparation solide-liquide, en particulier une filtration sous vide ou une filtration par filtres-presses, dans lequel le dispositif de séparation est disposé en amont de l'appareil d'électrocoagulation, et un dispositif de traitement pour traiter la saumure sortie du dispositif de séparation, dans lequel le dispositif de traitement comprend un appareil d'électrocoagulation.

14. Dispositif selon la revendication 13, **caractérisé en ce qu'**un deuxième dispositif de séparation, en particulier une centrifugeuse ou un appareil de filtration, est disposé en aval de l'appareil d'électrocoagulation, pour séparer le floculat obtenu dans l'appareil d'électrocoagulation.

15. Dispositif selon la revendication 13 ou 14, **caractérisé en ce que** le dispositif de traitement comprend en outre un bain disposé en amont de l'appareil d'électrocoagulation avec un appareil de mélange pour précipiter le calcium et une quantité partielle des métaux lourds présents dans la saumure.

16. Dispositif selon la revendication 13, 14 ou 15, **caractérisé en ce que** l'appareil d'électrocoagulation présente une anode Fe et/ou Al.

17. Dispositif selon l'une quelconque des revendications 13 à 16, **caractérisé en ce qu'**un dispositif de réalisation d'une cristallisation fractionnée est disposé en aval du dispositif de traitement.
